# EUROPÄISCHE PATENTSCHRIFT

(11) **EP 2 797 790 B1**
(45) Veröffentlichungstag und Bekanntmachung des Hinweises auf die Patenterteilung: **13.01.2016**
(21) Anmeldenummer: 12780722.0
(22) Anmeldetag: 29.10.2012
(51) Int. Cl.: B60T 8/36

(54) **PUMPENGEHÄUSE EINES KRAFTFAHRZEUG-HYDROAGGREGATS MIT EINEM RAD- UND EINEM HAUPTZYLINDER-DRUCKSENSORANSCHLUSS**
PUMP HOUSING FOR A MOTOR VEHICLE HYDRAULIC ASSEMBLY WITH AN ACCESS FOR A WHEEL PRESSURE SENSOR AND AN ACCESS FOR A MASTER CYLINDER PRESSURE SENSOR
CARTER DE POMPE D'UN GROUPE HYDRAULIQUE D'UN VÉHICULE AUTOMOBILE, AVEC UN RACCORDEMENT DE CAPTEUR DE PRESSION DE ROUE ET UN RACCORDEMENT DE CAPTEUR DE PRESSIONDE MAÎTRE-CYLINDRE

(30) Priorität: 27.12.2011 DE 102011089915
(43) Veröffentlichungstag der Anmeldung: 05.11.2014
(73) Patentinhaber: Robert Bosch GmbH, 70442 Stuttgart (DE)
(72) Erfinder: SCHLITZKUS, Michael, 87463 Dietmannsried (DE); MAYR, Matthias, 87549 Rettenberg (DE); WEH, Andreas, 87477 Sulzberg (DE)
(86) Internationale Anmeldenummer: PCT/EP2012/071332
(87) Internationale Veröffentlichungsnummer: WO 2013/097961

(56) Entgegenhaltungen:
- EP-A2- 1 707 463
- WO-A1-2008/151919
- WO-A1-2009/047099
- DE-A1- 10 145 540
- JP-A- 2006 056 406

## Beschreibung

### Stand der Technik

Die Erfindung betrifft ein Pumpengehäuse eines Kraftfahrzeug-Hydroaggregats an dem mindestens zwei Einlassventilöffnungen, mindestens zwei Auslassventilöffnungen, mindestens ein Rad-Drucksensoranschluss, mindestens ein Hauptzylinder-Drucksensoranschluss, mindestens eine Hochdruckschaltventilöffnung und mindestens eine Umschaltventilöffnung ausgebildet sind, und bei dem die mindestens zwei Einlassventilöffnungen in einer ersten Zeile, die mindestens zwei Auslassventilöffnungen in einer nachfolgenden zweiten Zeile, der mindestens eine Rad-Drucksensoranschluss in einer weiter nachfolgenden dritten Zeile und die mindestens eine Hochdruckschaltventilöffnung sowie die mindestens eine Umschaltventilöffnung in einer weiter nachfolgenden vierten Zeile angeordnet sind. Darüber hinaus betrifft die Erfindung die Verwendung eines derartigen Pumpengehäuses an einem Kraftfahrzeug-Hydroaggregat.

Hydroaggregate werden bei Kraftfahrzeugen, wie beispielsweise Personenkraftwagen oder Lastkraftwagen verwendet, um an deren Bremssystem geregelte Bremsdrücke bereitzustellen. Insbesondere werden mit derartigen Hydroaggregaten Funktionen eines Antiblockiersystems (ABS), einer Antischlupfregelung (ASR) und/oder eines elektronischen Stabilitätsprogramms (ESP) realisiert. Am Bremssystem wird von einem Fahrer des Kraftfahrzeugs über ein Bremspedal Bremsdruck mittels eines Hauptzylinders bzw. Hauptbremszylinders erzeugt. Alternativ kann der Bremsdruck bei ESP-Systemen von diesen selbst aufgebaut werden. Die Hydroaggregate dieser Systeme weisen eine Pumpe mit mehreren Pumpenkolben bzw. Pumpenelementen, mit einem Motor sowie mit einer Vielzahl Ventile auf. Die Ventile sind in der Regel elektromagnetisch gesteuert, so dass an einzelnen Bremsen oder Bremskreisen unterschiedliche Bremsdrücke bereitgestellt werden können.

Bei modernen Fahrzeugbremsanlagen werden ferner inzwischen Rad-Drucksensoren und Hauptzylinder-Drucksensoren eingesetzt, die zum Messen der an einer zugehörigen Radbremse und dem Hauptzylinder vorherrschenden Drücke dienen. Die Rad-Drucksensoren werden zum Abbilden besonderer Funktionen an den Systemen, wie z.B. einer Bremsassistenz, benötigt.

Das Pumpengehäuse eines derartigen Hydroaggregats ist in der Regel im Wesentlichen quaderförmig bzw. blockförmig aus Aluminium gestaltet und mit Bohrungen für die Anordnung der Bauelemente und Leitungen versehen.

Aus DE 101 45 540 A1 ist eine Drucksensorbaugruppe für ein Drucksteuergerät für Kraftfahrzeug-Bremsanlagen bekannt. Das Drucksteuergerät weist dabei in einer ersten Zeile vier Einlassventile und in einer zweiten Zeile vier Auslassventile auf. Dann folgt eine dritte Zeile mit der Drucksensorbaugruppe in der Mitte zwischen zwei Niederdruckspeichern und schließlich eine vierte Zeile mit zwei Umschalt- und zwei Trennventilen. Die Drucksensorbaugruppe ist als eine funktionsfähige und vorgeprüfte Baugruppe gestaltet, die eigenständig handhabbar ist. Sie umfasst ein Trägergehäuse und drei Druckaufnahmeöffnungen, deren genaue Funktion nicht beschrieben ist.

Es ist eine Aufgabe der Erfindung ein Kraftfahrzeug-Hydroaggregat mit einem Pumpengehäuse zu schaffen, welches im Vergleich zu bekannten Pumpengehäusen kompakter gestaltet und kostengünstiger herstellbar ist.

### Offenbarung der Erfindung

Die Aufgabe ist mit einem Pumpengehäuse eines Kraftfahrzeug-Hydroaggregats gelöst, an dem mindestens zwei Einlassventilöffnungen, mindestens zwei Auslassventilöffnungen, mindestens ein Rad-Drucksensoranschluss, mindestens ein Hauptzylinder-Drucksensoranschluss, mindestens eine Hochdruckschaltventilöffnung und mindestens eine Umschaltventilöffnung ausgebildet sind. Die mindestens zwei Einlassventilöffnungen sind erfindungsgemäß in einer ersten Zeile bzw. Reihe, die mindestens zwei Auslassventilöffnungen in einer nachfolgenden zweiten Zeile bzw. Reihe, der mindestens eine Rad-Drucksensoranschluss in einer weiter nachfolgenden dritten Zeile bzw. Reihe und die mindestens eine Hochdruckschaltventilöffnung sowie die mindestens eine Umschaltventilöffnung in einer weiter nachfolgenden vierten Zeile bzw. Reihe angeordnet. Die derartige Anordnung führt zu einer insgesamt besonders kompakten Bauweise des Hydroaggregats. Gemäß der Erfindung ist darüber hinaus der mindestens eine Hauptzylinder-Drucksensoranschluss in einer nochmals weiter nachfolgenden Zeile bzw. Reihe angeordnet.

Vorzugsweise ist an dem erfindungsgemäßen Pumpengehäuse eine erste Leitung von der mindestens einen Auslassventilöffnung zu einer Radbremszylinderöffnung vorgesehen und der Rad-Drucksensoranschluss ist über eine erste Leitungsverbindung mit der ersten Leitung verbunden.

Bevorzugt ist ferner an dem Pumpengehäuse gemäß der Erfindung die erste Leitungsverbindung mittels einer von der Seite einer Pumpenelementöffnung ausgeformten ersten Querbohrung hergestellt.

Das Pumpengehäuse umfasst dabei vorzugsweise eine zweite Leitung die von einem Hauptzylinderanschluss zu der mindestens einen Hochdruckschaltventilöffnung und der mindestens einen Umschaltventilöffnung geführt ist und es ist ferner der Hauptzylinder-Drucksensoranschluss über eine zweite Leitungsverbindung mit der zweiten Leitung verbunden.

Die zweite Leitungsverbindung ist vorteilhaft mittels einer von der Seite einer Pumpenelementöffnung hergestellten zweiten Querbohrung hergestellt.

In besonders raumsparender Weise sind ferner zwei Umschaltventilöffnungen zwischen zwei Hochdruckschaltventilöffnungen angeordnet.

Schließlich ist die Aufgabe auch durch Verwendung eines derartigen erfindungsgemäßen Pumpengehäuses an einem Kraftfahrzeug-Hydroaggregat gelöst..

Nachfolgend wird ein Ausführungsbeispiel der erfindungsgemäßen Lösung anhand der beigefügten schematischen Zeichnungen näher erläutert. Es zeigt:
- Fig. 1: einen Hydraulikplan einer Fahrzeugbremsanlage gemäß dem Stand der Technik, wie er mit einem zugehörigen Pumpengehäuse abgebildet wird,
- Fig. 2: eine Vorderansicht eines derartigen Pumpengehäuses gemäß dem Stand der Technik,
- Fig. 3: die Draufsicht III gemäß Fig. 2,
- Fig. 4: eine perspektivische Vorderansicht des Pumpengehäuses gemäß Fig. 2 und 3,
- Fig. 5: einen Hydraulikplan einer Fahrzeugbremsanlage gemäß der Erfindung, wie er mit einem zugehörigen Pumpengehäuse abgebildet wird und
- Fig. 6: eine perspektivische Vorderansicht eines derartigen Pumpengehäuses gemäß der Erfindung.

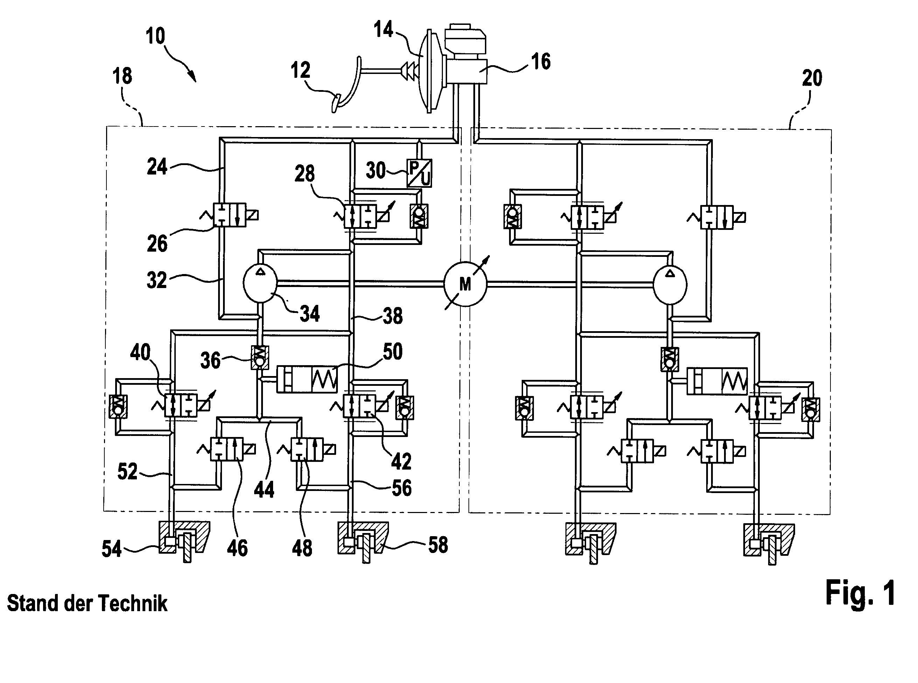

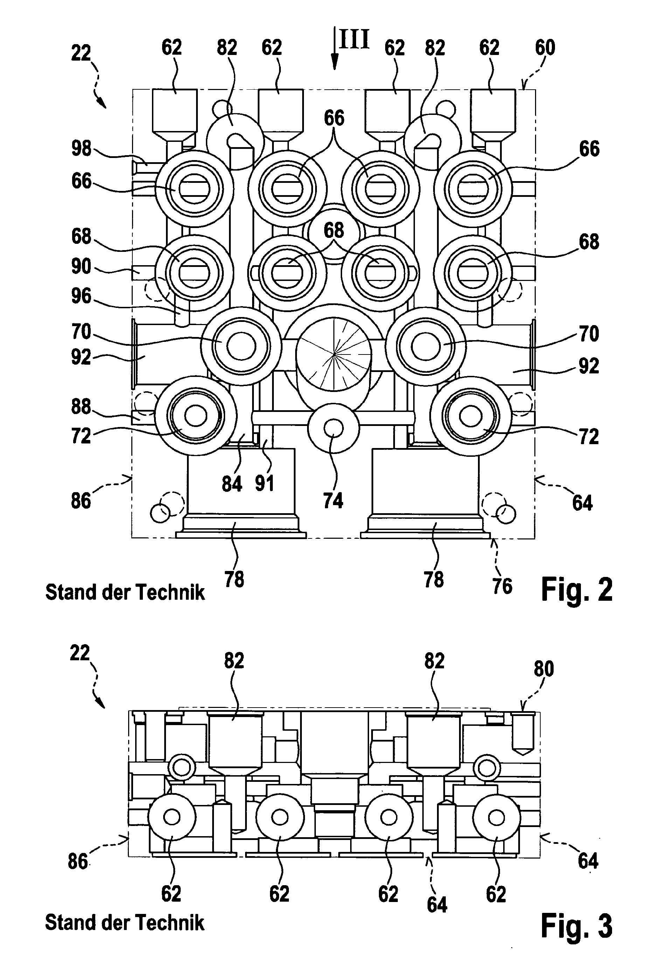

Eine in Fig. 1 dargestellte Fahrzeugbremsanlage 10 umfasst ein Bremspedal 12 mit einem Bremskraftverstärker 14 und einem daran angeschlossenen Hauptzylinder 16. Der Hauptzylinder 16 ist an zwei weitgehend baugleiche Bremskreise 18 und 20 angeschlossen, die im Wesentlichen in einem gemeinsamen Pumpengehäuse 22 (siehe Fig. 2 ff.) abgebildet sind. Nachfolgend wird nur einer dieser Bremskreise, nämlich der Bremskreis 18, näher erläutert.

Für den Bremskreis 18 führt eine Leitung 24 vom Hauptzylinder 16 zu einem Hochdruckschaltventil 26 und einem Umschaltventil 28. An der Leitung 24 ist ferner ein Hauptzylinder-Drucksensor 30 angeschlossen. Vom Hochdruckschaltventil 26 führt eine Leitung 32 zur Saugseite eines Pumpenelements 34 sowie zu einem Rückschlagventil 36. Vom Umschaltventil 28 führt eine Leitung 38 zur Druckseite des Pumpenelements 34 sowie zu einem ersten Einlassventil 40 und einem zweiten Einlassventil 42. Von dem Rückschlagventil 36 führt eine Leitung 44 zu einem ersten Auslassventil 46 und einem zweiten Auslassventil 48. An der Leitung 44 ist ferner ein Speicher 50 angeschlossen. Von dem ersten Einlassventil 40 führt eine Leitung 52 zu einem ersten Radbremszylinder 54 sowie zum ersten Auslassventil 46 und von dem zweiten Einlassventil 42 führt eine Leitung 56 zu einem zweiten Radbremszylinder 58 sowie zum zweiten Auslassventil 48.

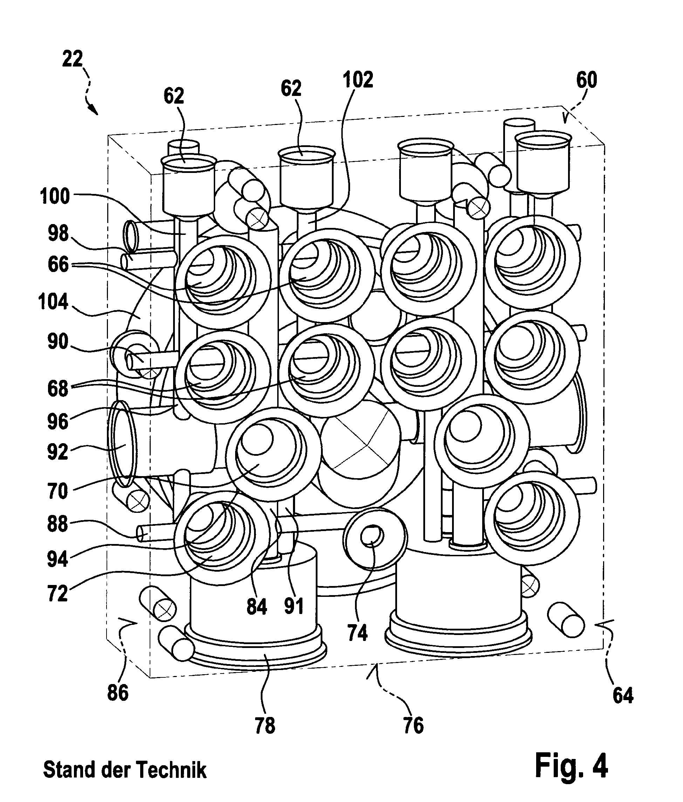

In den Fig. 2 bis 4 ist ein Pumpengehäuse 22 gemäß dem Stand der Technik dargestellt, welches im Wesentlichen aus einem Aluminiumblock gebildet ist, in dem mittels Bohren bzw. Fräsen Öffnungen ausgebildet sind. So befinden sich an der Oberseite 60 des Aluminiumblocks vier Radbremszylinderöffnungen 62 zum Aufnehmen der oben genannten Anschlüsse für die Radbremszylinder 54 sowie 58 und an der Vorderseite 64 des Aluminiumblocks in einer obersten Zeile vier Einlassventilöffnungen 66 zum Aufnehmen der oben genannten Einlassventile 40 sowie 42. Unter den Einlassventilöffnungen 66 befinden sich in einer zweiten Zeile vier Auslassventilöffnungen 68 zum Aufnehmen der oben genannten Auslassventile 46 sowie 48. Unter den Auslassventilöffnungen 68 sind in einer dritten Zeile dann zwei Hochdruckschaltventilöffnungen 70 und in einer darunter liegenden vierten Zeile außen zwei Umschaltventilöffnungen 72 sowie mittig ein Hauptzylinder-Drucksensoranschluss 74 zum Aufnehmen eines oben genannten Hochdruckschaltventils 26, eines Umschaltventils 28 bzw. des Drucksensors 30 angeordnet.

An der Unterseite 76 des Aluminiumblocks befinden sich zwei Speicheröffnungen 78 zum Aufnehmen eines oben genannten Speichers 50 und an der Rückseite 80 zwei Hauptzylinderanschlüsse 82. Zwischen einer Speicheröffnung 78 und einem zugehörigen Hauptzylinderanschluss 82 erstreckt sich die oben genannte Leitung 24 in Form einer in die Speicheröffnung 78 eingebrachten Längsbohrung 84. Zu dieser Längsbohrung 84 ist von der linken Seite 86 des Aluminiumblocks aus eine Querbohrung 88 ausgebildet, welche die Längsbohrung 84 mit dem mittig angeordneten Hauptzylinder-Drucksensoranschluss 74 verbindet. Die Querbohrung 88 erstreckt sich dabei durch eine Umschaltventilöffnung 72, so dass auch diese an die Längsbohrung 84 angeschlossen ist. In die Längsbohrung 84 mündet ferner auch eine nach außen gerichtet offene Hochdruckschaltventilöffnung 70.

Zwei Auslassventilöffnungen 68 sind über eine Querbohrung 90 und eine Längsbohrung 91 ebenfalls mit einer zugehörigen Speicheröffnung 78 verbunden, um die oben genannte Leitung 44 zu bilden. Eine mit der Längsbohrung 84 verbundene Hochdruckschaltventilöffnung 70 ist ferner mit einer Pumpenelementöffnung 92 verbunden, die von der Seite aus in den Aluminiumblock hinein ausgebildet ist. Ferner ist die Pumpenelementöffnung 92 mit der Speicheröffnung 78 über eine Längsbohrung 94, in der das Rückschlagventil 36 am Übergang von der Längsbohrung 94 in die Speicheröffnung 78 angeordnet ist, verbunden, um die oben genannte Leitung 32 zu bilden.

Die an der Querbohrung 88 angeschlossene Umschaltventilöffnung 72 ist ferner mittels einer Längsbohrung 96 mit der Pumpenelementöffnung 92 und mittels einer weiteren Querbohrung 98 mit zwei Einlassventilöffnungen 66 verbunden, um die oben genannte Leitung 38 zu bilden. Die oben genannten Leitungen 52 und 56 sind schließlich mittels Längsbohrungen 100 bzw. 102 ausgebildet, die jeweils von einer der Radbremszylinderöffnungen 62 zu einer zugehörigen Einlassventilöffnung 66 sowie einer Auslassventilöffnung 68 geführt sind.

An der Rückseite des derartigen Aluminiumblocks befindet sich noch ein Motoranschluss mit einem zugehörigen Antriebsmotor 104 für die in den Pumpenelementöffnungen 92 anzuordnenden Pumpenelemente 34.

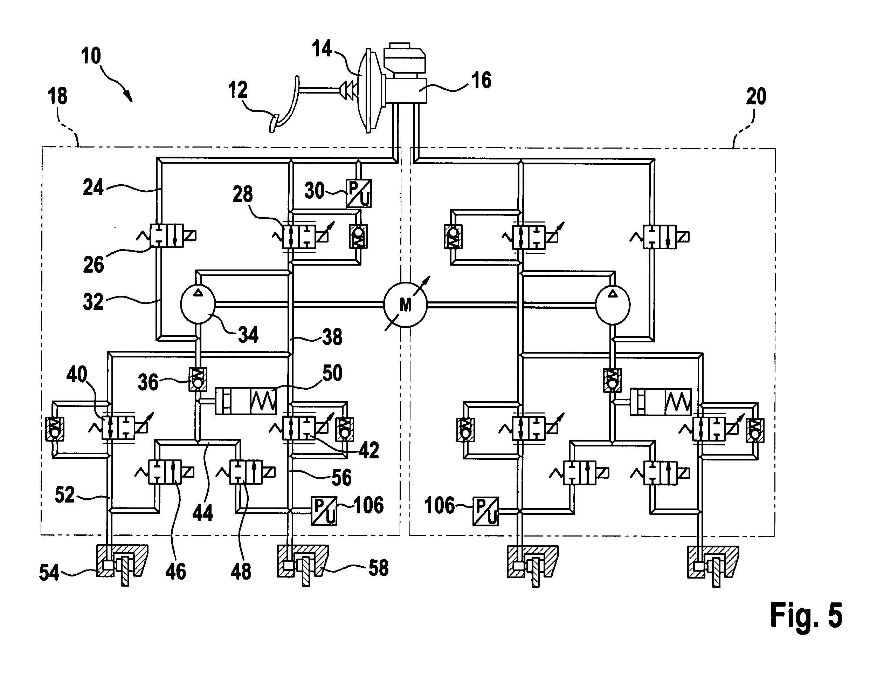

In Fig. 5 ist der Hydraulikplan einer erfindungsgemäßen Fahrzeugbremsanlage 10 dargestellt, welche hinsichtlich der Bauelemente 12, 14, 16 sowie der Bremskreise 18 und 20 im Wesentlichen gleich aufgebaut ist, wie die Fahrzeugbremsanlage gemäß Fig. 1.

Bei der Fahrzeugbremsanlage gemäß Fig. 5 ist darüber hinaus an der Leitung 56 jedes Bremskreises 18 und 20 ein Rad-Drucksensor 106 hydraulisch angeschlossen.

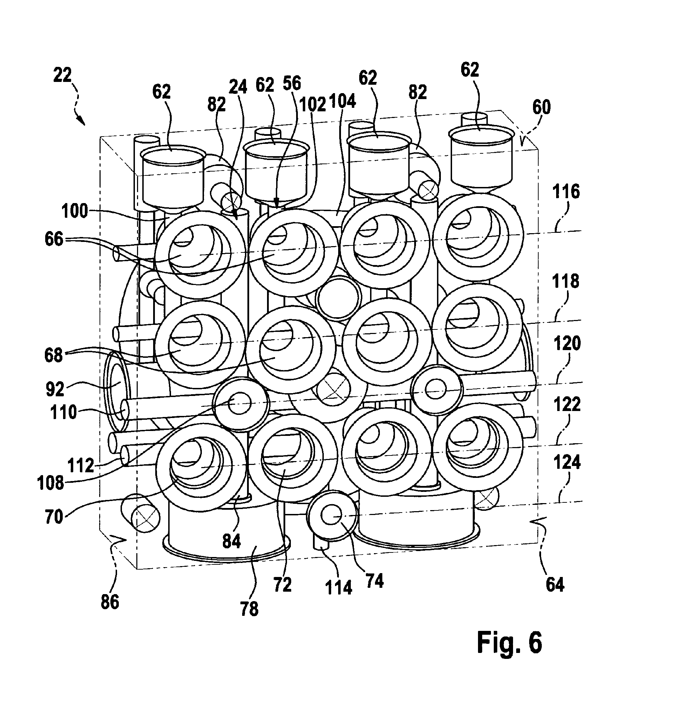

Die Fig. 6 zeigt das zugehörige erfindungsgemäße Pumpengehäuse 22, bei dem ebenfalls vier Radbremszylinderöffnungen 62, vier Einlassventilöffnungen 66, vier Auslassventilöffnungen 68, zwei Hochdruckschaltventilöffnungen 70, zwei Umschaltventilöffnungen 72, ein Hauptzylinder-Drucksensoranschluss 74, zwei Speicheröffnungen 78, zwei Hauptzylinderanschlüsse 82, zwei Pumpenelementöffnungen 92 und ein Motoranschluss mit einem Antriebsmotor 104 vorgesehen sind. Allerdings sind bei der erfindungsgemäßen Gestaltung des Pumpengehäuses 22 die Öffnungen und die zugehörigen Bohrungen anders angeordnet und ausgeführt als gemäß dem Stand der Technik.

So sind bei dem erfindungsgemäßen Pumpengehäuse 22 gemäß Fig. 6 an dessen Vorderseite 64 die Einlassventilöffnungen 66 in einer ersten Zeile 116 bzw. Reihe, die Auslassventilöffnungen 68 in einer zweiten Zeile 118 bzw. Reihe, zwei zu den Rad-Drucksensoren 106 gehörende Rad-Drucksensoranschlüsse 108 in einer nachfolgenden dritten Zeile 120 bzw. Reihe und die beiden Hochdruckschaltventilöffnungen 70 sowie die beiden Umschaltventilöffnungen 72 in einer weiter nachfolgenden vierten Zeile 122 bzw. Reihe angeordnet. In einer weiter nachfolgenden fünften Zeile 124 bzw. Reihe ist der Hauptzylinder-Drucksensoranschluss 74 angeordnet.

Der einzelne Rad-Drucksensoranschluss 108 mündet in eine Querbohrung 110, die von der linken Seite 86 des Pumpengehäuses 22 neben der zugehörigen Pumpenelementöffnung 92 ausgebildet ist. Die Querbohrung 110 ist bis zu einem Kreuzungspunkt mit der Längsbohrung 102 geführt, welche als Leitung 56 von einer der Radbremszylinderöffnungen 62 zu einer zugehörigen Einlassventilöffnung 66 sowie einer Auslassventilöffnung 68 führt. Die Querbohrung 110 bildet damit einen Abschnitt einer erste Leitungsverbindung zwischen dem Rad-Drucksensoranschluss 108 und der zur Längsbohrung 102 gehörenden Radbremszylinderöffnung 62.

Die beiden Umschaltventilöffnungen 72 sind zwischen den beiden Hochdruckschaltventilöffnungen 70 angeordnet. Die einzelne Umschaltventilöffnung 72 und die einzelne Hochdruckschaltventilöffnung 70 sind mit der in der zugehörigen Speicheröffnung 78 ausgebildeten Längsbohrung 84 mittels je einer von der Seite 86 bzw. gegenüberliegenden Seite aus hergestellten Querbohrung 112 verbunden. Die Querbohrung 112 an der linken Seite 86 durchsetzt die zugehörige Umschaltventilöffnung 72, die zugehörige Längsbohrung 84 und die zugehörige Hochdruckschaltventilöffnung 70 und ist als Abschnitt einer zweiten Leitungsverbindung weiter bis zur Mitte des Pumpengehäuses 22 geführt. Dort stößt die Querbohrung 112 auf eine Längsbohrung 114, die von der Unterseite 76 aus ausgebildet ist und einen weiteren Abschnitt der zweiten Leitungsverbindung bis zu einem Kreuzungspunkt mit dem Hauptzylinder-Drucksensoranschluss 74 bildet. Der Hauptzylinder-Drucksensoranschluss 74 mündet dabei unmittelbar in diese Längsbohrung 114.

## Patentansprüche

1. Pumpengehäuse (22) eines Kraftfahrzeug-Hydroaggregats, an dem mindestens zwei Einlassventilöffnungen (66), mindestens zwei Auslassventilöffnungen (68), mindestens ein Rad-Drucksensoranschluss (108), mindestens ein Hauptzylinder-Drucksensoranschluss (74), mindestens eine Hochdruckschaltventilöffnung (70) und mindestens eine Umschaltventilöffnung (72) ausgebildet sind, und bei dem die mindestens zwei Einlassventilöffnungen (66) in einer ersten Zeile (116), die mindestens zwei Auslassventilöffnungen (68) in einer nachfolgenden zweiten Zeile (118), der mindestens eine Rad-Drucksensoranschluss (108) in einer weiter nachfolgenden dritten Zeile (120) und die mindestens eine Hochdruckschaltventilöffnung (70) sowie die mindestens eine Umschaltventilöffnung (72) in einer weiter nachfolgenden vierten Zeile (122) angeordnet sind,
**dadurch gekennzeichnet, dass** der mindestens eine Hauptzylinder-Drucksensoranschluss (74) in einer nochmals weiter nachfolgenden Zeile (124) angeordnet ist.

2. Pumpengehäuse nach Anspruch 1, bei dem eine erste Leitung (56) von der mindestens einen Auslassventilöffnung (68) zu einer Radbremszylinderöffnung (62) vorgesehen ist und der Rad-Drucksensoranschluss (108) über eine erste Leitungsverbindung (110) mit der ersten Leitung (56) verbunden ist.

3. Pumpengehäuse nach Anspruch 2, bei dem die erste Leitungsverbindung (110) mittels einer von der Seite einer Pumpenelementöffnung (92) ausgeformten ersten Querbohrung (110) hergestellt ist.

4. Pumpengehäuse nach einem der Ansprüche 1 bis 3, bei dem eine zweite Leitung (24) von einem Hauptzylinderanschluss (82) zu der mindestens einen Hochdruckschaltventilöffnung (70) und der mindestens einen Umschaltventilöffnung (72) vorgesehen ist und der Hauptzylinder-Drucksensoranschluss (74) über eine zweite Leitungsverbindung (112, 114) mit der zweiten Leitung (24) verbunden ist.

5. Pumpengehäuse nach Anspruch 4, bei dem die zweite Leitungsverbindung (112, 114) mittels einer von der Seite einer Pumpenelementöffnung (92) hergestellten zweiten Querbohrung (112) hergestellt ist.

6. Pumpengehäuse nach einem der Ansprüche 1 bis 5, bei dem zwei Umschaltventilöffnungen (72) zwischen zwei Hochdruckschaltventilöffnungen (70) angeordnet sind.

7. Verwendung des Pumpengehäuses (22) nach einem der Ansprüche 1 bis 6 an einem Kraftfahrzeug-Hydroaggregat.

## Claims

1. Pump housing (22) of a motor vehicle hydraulic assembly, on which pump housing (22) at least two inlet valve openings (66), at least two outlet valve openings (68), at least one wheel pressure sensor connector (108), at least one master cylinder pressure sensor connector (74), at least one high pressure control valve opening (70) and at least one switchover valve opening (72) are configured, and in which pump housing (22) the at least two inlet valve openings (66) are arranged in a first row (116), the at least two outlet valve openings (68) are arranged in a following second row (118), the at least one wheel pressure sensor connector (108) is arranged in a further following third row (120), and the at least one high pressure control valve opening (70) and the at least one switchover valve opening (72) are arranged in a further following fourth row (122), **characterized in that** the at least one master cylinder pressure sensor connector (74) is arranged in yet a further following row (124).

2. Pump housing according to Claim 1, in which a first line (56) is provided from the at least one outlet valve opening (68) to a wheel brake cylinder opening (62), and the wheel pressure sensor connector (108) is connected via a first line connection (110) to the first line (56).

3. Pump housing according to Claim 2, in which the first line connection (110) is produced by means of a first transverse bore (110) which is shaped out from the side of a pump element opening (92).

4. Pump housing according to one of Claims 1 to 3, in which a second line (24) is provided from a master cylinder connector (82) to the at least one high pressure control valve opening (70) and the at least one switchover valve opening (72), and the master cylinder pressure sensor connector (74) is connected via a second line connection (112, 114) to the second line (24).

5. Pump housing according to Claim 4, in which the second line connection (112, 114) is produced by means of a second transverse bore (112) which is produced from the side of a pump element opening (92).

6. Pump housing according to one of Claims 1 to 5, in which two switchover valve openings (72) are arranged between two high pressure control valve openings (70).

7. Use of the pump housing (22) according to one of Claims 1 to 6 on a motor vehicle hydraulic assembly.

## Revendications

1. Carter de pompe (22) d'une unité hydraulique d'un véhicule automobile, au niveau duquel sont réalisées au moins deux ouvertures de soupape d'entrée (66), au moins deux ouvertures de soupape de sortie (68), au moins un raccord de capteur de pression de roue (108), au moins un raccord de capteur de pression de cylindre principal (74), au moins une ouverture de soupape de commutation haute pression (70) et au moins une ouverture de soupape d'inversion (72), et dans lequel les au moins deux ouvertures de soupape d'entrée (66) sont disposées dans une première rangée (116), les au moins deux ouvertures de soupape de sortie (68) sont disposés dans une deuxième rangée suivante (118), l'au moins un raccord de capteur de pression de roue (108) est disposé dans une troisième rangée encore suivante (120) et l'au moins une ouverture de soupape de commutation haute pression (70) ainsi que l'au moins une ouverture de soupape d'inversion (72) sont disposées dans une quatrième rangée encore suivante (122),
**caractérisé en ce que** l'au moins un raccord de capteur de pression de cylindre principal (74) est disposé dans une rangée encore suivante supplémentaire (124).

2. Carter de pompe selon la revendication 1, dans lequel une première conduite (56) depuis l'au moins une ouverture de soupape de sortie (68) jusqu'à une ouverture de cylindre de frein de roue (62) est prévue, et le raccord de capteur de pression de roue (108) est connecté par le biais d'une première connexion de conduite (110) à la première conduite (56).

3. Carter de pompe selon la revendication 2, dans lequel la première connexion de conduite (110) est réalisée au moyen d'un premier alésage transversal (110) formé depuis le côté d'une ouverture d'élément de pompe (92).

4. Carter de pompe selon l'une quelconque des revendications 1 à 3, dans lequel une deuxième conduite (24) depuis un raccord de cylindre principal (82) jusqu'à l'au moins une ouverture de soupape de commutation haute pression (70) et l'au moins une ouverture de soupape d'inversion (72) est prévue et le raccord de capteur de pression de cylindre principal (74) est connecté à la deuxième conduite (24) par le biais d'une deuxième connexion de conduite (112, 114).

5. Carter de pompe selon la revendication 4, dans lequel la deuxième connexion de conduite (112, 114) est réalisée au moyen d'un deuxième alésage transversal (112) réalisé depuis le côté d'une ouverture d'élément de pompe (92).

6. Carter de pompe selon l'une quelconque des revendications 1 à 5, dans lequel deux ouvertures de soupape d'inversion (72) sont disposées entre deux ouvertures de soupape de commutation haute pression (70).

7. Utilisation du carter de pompe (22) selon l'une quelconque des revendications 1 à 6 au niveau d'un groupe hydraulique d'un véhicule automobile.
